# EUROPÄISCHE PATENTANMELDUNG

(11) **EP 4 131 501 A1**
(43) Veröffentlichungstag der Anmeldung: **08.02.2023**
(21) Anmeldenummer: 21189700.4
(22) Anmeldetag: 04.08.2021
(51) Int. Cl.: H01M 4/62, H01M 4/1391, H01M 4/131, H01M 4/525

(54) **KATHODENPASTE, VERFAHREN ZU DEREN HERSTELLUNG UND VERWENDUNG**

(71) Anmelder: VARTA Microbattery GmbH, 73479 Ellwangen Jagst (DE)
(72) Erfinder: Schebesta, Sebastian, 73479 Ellwangen (DE)
(74) Vertreter: Ostertag & Partner Patentanwälte mbB

(57) **Zusammenfassung**

Bei einer Kathodenpaste (1) für die Herstellung einer Kathode einer Lithium-Ionen-Zelle umfasst die Kathodenpaste als Aktivmaterial ein metallisches Lithium-Mischoxid, das aus der Gruppe ausgewählt ist, die aus einem Lithium-Nickel-Mangan-Cobalt-Mischoxid der Formel LiNiₓMn_{y}Co_{z}O₂, wobei x + y + z = 1 und x ≥ 0,6 ist, und einem Lithium-Nickel-Cobalt-Aluminium-Mischoxid der Formel LiNiₓCo-_{y}Al_{z}O₂, wobei x + y + z = 1 und x ≥ 0,8 ist, und Mischungen mit den genannten Lithium-Mischoxiden besteht. Weiterhin umfasst die Kathodenpaste einen Elektrodenbinder auf Basis von Polyvinylidendifluorid. Weiterhin umfasst die Kathodenpaste ein Lösemittel, das N-Methylpyrrolidon und/oder N-Ethylpyrrolidon umfasst. Darüber hinaus umfasst das Lösemittel eine organische Zusatzkomponente, die dazu geeignet ist, Hydroxidionen zu neutralisieren, und die einen Siedepunkt unter Normaldruck in einem Bereich von 50 °C bis 150 °C aufweist.

## Beschreibung

Die vorliegende Erfindung betrifft eine Kathodenpaste, ein Verfahren zu deren Herstellung, eine Verwendung der Kathodenpaste und ein Verfahren zur Herstellung einer elektrochemischen Energiespeicherzelle unter Verwendung der Kathodenpaste.

### ANWENDUNGSGEBIET UND STAND DER TECHNIK

Lithium-Ionen-Zellen sind ein weit verbreiteter Typ von Energiespeicherelementen. Allgemein werden vorliegend unter einem Energiespeicherelement sowohl eine einzelne zur Speicherung elektrischer Energie befähigte elektrochemische Zellen als auch eine Batterie mit mehreren elektrisch miteinander verschalteten, zur Speicherung elektrischer Energie befähigter elektrochemischer Zellen verstanden. Jede elektrochemische Zelle umfasst mindestens eine positive und mindestens eine negative Elektrode, welche in der Regel durch einen Separator voneinander getrennt sind.

In elektrochemischen Zellen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden Ionenstrom innerhalb des Energiespeicherelements. Dieser Ionenstrom durchquert den Separator und wird durch einen ionenleitenden Elektrolyten gewährleistet.

In sekundären (wieder aufladbaren) elektrochemischen Zellen ist diese Entladereaktion reversibel, es besteht also die Möglichkeit, die bei der Entladung erfolgte Umwandlung chemischer Energie in elektrische Energie umzukehren.

Werden im Zusammenhang mit sekundären elektrochemischen Zellen die Begriffe "Anode" und "Kathode" benutzt, benennt man die Elektroden in der Regel entsprechend ihrer Entladefunktion. Die negative Elektrode in solchen Energiespeicherelementen ist also die Anode, die positive Elektrode die Kathode.

Eine Lithium-Ionen-Zelle umfasst Elektroden, die Lithium-Ionen reversibel aufnehmen und wieder abgeben können, sowie einen Lithium-Ionen enthaltenden Elektrolyten. Die Elektroden von Lithium-Ionen-Zellen setzen sich üblicherweise aus einem elektrisch leitenden Stromkollektor sowie elektrochemisch aktiven Komponenten (oft auch als Aktivmaterialien bezeichnet) und gegebenenfalls elektrochemisch inaktiven Komponenten zusammen. Die elektrochemisch inaktiven Komponenten erfüllen wichtige Funktionen in den Elektroden, sind jedoch nicht an der Speicherung von Lithium bzw. von Lithium-Ionen beteiligt.

Die Stromkollektoren dienen dazu, die elektrochemisch aktiven Komponenten möglichst großflächig elektrisch zu kontaktieren. Sie bestehen üblicherweise aus bandförmigen, flächigen Metallsubstraten, beispielsweise aus Metallfolien oder aus einem Metallschaum oder aus einem Metallnetz oder einem Metallgitter oder einem metallisierten Vlies.

Als Aktivmaterialien kommen für die Elektroden sekundärer Lithium-Ionen-Zellen sämtliche Materialien in Frage, die Lithium-Ionen aufnehmen und wieder abgeben können. Stand der Technik sind diesbezüglich für die negative Elektrode (Anode) sekundärer Lithium-Ionen-Zellen insbesondere Materialien auf Kohlenstoffbasis wie graphitischer Kohlenstoff oder zur Interkalation von Lithium befähigte, nicht-graphitische Kohlenstoffmaterialien. Weiterhin können auch metallische und halbmetallische Materialien, die mit Lithium legierbar sind, zum Einsatz kommen. So sind beispielsweise die Elemente Zinn, Antimon und Silizium in der Lage, mit Lithium intermetallische Phasen zu bilden. Insbesondere können die kohlenstoffbasierten Aktivmaterialien mit den metallischen und/oder halbmetallischen Materialien auch kombiniert werden.

Für die positive Elektrode (Kathode) sekundärer Lithium-Ionen-Zellen werden als Aktivmaterialien unter anderem metallische Lithium-Mischoxide verwendet, die Nickel enthalten können. Besonders verbreitet sind Lithium-Nickel-Mangan-Cobalt-Oxid (NMC) und Lithium-Nickel-Cobalt-Aluminium-Oxid (NCA). Auch Mischungen und Derivate der genannten Materialien können eingesetzt werden.

Als elektrochemisch inaktive Komponenten sind an erster Stelle Elektrodenbinder (Bindemittel) und Leitmittel zu nennen. Die Elektrodenbinder gewährleisten die mechanische Stabilität der Elektroden und sorgen für die Kontaktierung der Partikel aus elektrochemisch aktivem Material untereinander sowie zum Stromkollektor. Übliche Elektrodenbinder basieren oftmals auf Polyvinylidendifluorid (PVDF). Leitmittel wie Ruß dienen dazu, die elektrische Leitfähigkeit der Elektroden zu erhöhen.

Als Separatoren kommen für Lithium-Ionen-Zellen insbesondere poröse Kunststofffolien in Frage, beispielsweise aus einem Polyolefin oder aus einem Polyetherketon. Auch Vliese und Gewebe aus diesen Materialien können zum Einsatz kommen.

Als ionenleitenden Elektrolyten können Lithium-Ionen-Zellen beispielsweise eine Mischung organischer Carbonate, in der ein Lithiumsalz gelöst ist, enthalten. Ein oft eingesetztes Beispiel für ein geeignetes Lithiumsalz ist Lithiumhexafluorophosphat (LiPF6). Bevorzugt sind die Elektroden und Separatoren von Lithium-Ionen-Zellen mit dem Elektrolyten getränkt.

Es ist bekannt, die Kathoden von Lithium-Ionen-Zellen bzw. von entsprechenden Batterien unter Verwendung von lösemittelbasierten Kathodenpasten herzustellen, die das Aktivmaterial für die Kathode, Bindemittel und gegebenenfalls ein Leitmittel wie Ruß umfassen. Diese Kathodenpasten werden auf den flächigen Stromkollektor, also insbesondere auf ein flächiges Metallsubstrat wie zum Beispiel eine Aluminiumfolie, in dünner Schicht aufgebracht und in der Regel getrocknet.

Eine sehr gebräuchliche Substanzklasse für den Elektrodenbinder bzw. das Bindemittel ist dabei Polyvinylidendifluorid (PVDF). Der Einsatz dieser Bindemittelklasse erfordert die Verwendung aprotischer und stark polarer Lösemittel. Weit verbreitet in diesem Zusammenhang ist die Verwendung von N-Methylpyrrolidon (NMP) oder N-Ethylpyrrolidon (NEP).

Der Einsatz und die Verarbeitung von derartigen Kathodenpasten sind jedoch nicht unproblematisch. Vor allem kann es zu einer vorzeitigen Gelierung der Kathodenpaste kommen, die eine nachfolgende Verarbeitung erschwert. Zudem kann es zu Qualitätsschwankungen bei den unter Verwendung der Kathodenpasten hergestellten Lithium-Ionen-Zellen kommen.

Problematisch in diesem Zusammenhang ist vor allen Dingen die große Hygroskopizität der verwendeten Kathodenaktivmaterialien. Diese Materialien, insbesondere Lithium-Nickel-Mangan-Cobalt-Oxid oder Lithium-Nickel-Cobalt-Aluminium-Oxid, reagieren mit der umgebenden Feuchtigkeit unter Bildung stark alkalischer Hydroxidverbindungen. Diese Hydroxidverbindungen können wiederum an den vergleichsweise aziden Wasserstoffatomen des Polyvinylidendifluorids angreifen und eine Vernetzungsreaktion des Elektrodenbinders auslösen. Hierdurch kann es zu einer Viskositätsveränderung der Kathodenpaste und zu einer vorzeitigen Gelierung kommen. Zudem werden hierdurch die Haftungseigenschaften der Kathodenpaste verringert, so dass die Kathodenpaste für die weitere Verwendung unter Umständen unbrauchbarwird.

Bisherige Ansätze zur Lösung dieses Problems arbeiten beispielsweise mit einer chemischen Modifikation des Polyvinylidendifluorids, wobei beispielsweise eine Substitution von Wasserstoffatomen oder eine Co-Polymerisation mit anderen Monomeren durchgeführt wird. Das derart modifizierte Polyvinylidendifluorid reagiert im Vergleich mit einem nicht modifizierten Polyvinylidendifluorid in der Regel weniger schnell.

Die US 2013/0309570 A1 schlägt als anderen Lösungsansatz vor, der Paste ein anorganisches Additiv wie beispielsweise Aluminiumoxid, Zirkoniumoxid oder Vanadiumoxid zuzusetzen, um so eine Gelierung der Kathodenpaste zu vermeiden.

Als eine weitere Möglichkeit schlägt die US 7,829,219 B2 vor, der Kathodenpaste einen Polymerisationsinhibitor in Form eines Catechol-Derivats zuzusetzen.

Diese Lösungsansätze sind jedoch mit Nachteilen verbunden, da hierdurch die Bestandteile der resultierenden Kathode verändert werden. Im ersten Fall geschieht dies durch eine aufwändige Modifikation des PVDF und in den anderen Fällen durch den Zusatz weiterer Komponenten bzw. Fremdstoffen zu der Kathodenpaste, die die Eigenschaften der resultierenden Kathode verändern können. Beispielsweise können hierdurch die Bindeeigenschaften der Kathodenpaste auf dem Stromkollektor beeinträchtigt werden.

Ein anderer Ansatz zur Lösung des Problems versucht, den problematischen Feuchtigkeitseintrag während der Herstellung der Kathode weitestgehend zu vermeiden. Dies kann insbesondere durch die Verwendung von entsprechenden Schutzgasen und hochtrockenen Atmosphären während des Herstellungsprozesses der Kathode erfolgen. Hierbei handelt es sich jedoch um eine technologisch aufwendige und teure Maßnahme im Rahmen der Fertigung, die daher aus Sicht der Hersteller der Lithium-Ionen-Zellen unvorteilhaft ist.

### AUFGABE UND LÖSUNG

Demgegenüber stellt sich die vorliegende Erfindung die Aufgabe, eine verbesserte Kathodenpaste bereitzustellen, die die genannten Probleme aus dem Stand der Technik vermeidet. Insbesondere sollen mit der Kathodenpaste Qualitätsschwankungen bei der resultierenden Lithium-Ionen-Zelle bzw. bei entsprechenden Batterien vermieden werden. Weiterhin sollen Probleme beim Herstellungsprozess, die infolge von Zustandsänderungen der Kathodenpaste auftreten können, vermieden werden. Zudem soll eine Kathodenpaste bereitgestellt werden, die einen wenig aufwändigen Herstellungsprozess für die Lithium-Ionen-Zellen erlaubt, wobei gleichzeitig die Qualität und die Eigenschaften der Lithium-Ionen-Zelle bzw. entsprechender Batterien und insbesondere die Eigenschaften der Kathode gleichbleibend gut sind.

Diese Aufgabe wird durch eine Kathodenpaste mit den in Anspruch 1 angegebenen Merkmalen gelöst. Vorteilhafte Ausgestaltungen der erfindungsgemäßen Kathodenpaste ergeben sich aus den von Anspruch 1 abhängigen Ansprüchen. Weiterhin wird die Aufgabe durch ein Verfahren zur Herstellung einer Kathodenpaste, durch eine Verwendung der Kathodenpaste zur Herstellung von Lithium-Ionen-Zellen sowie durch ein Verfahren zur Herstellung einer Lithium-Ionen-Zelle unter Verwendung der erfindungsgemäßen Kathodenpaste gemäß den weiteren nebengeordneten Ansprüchen gelöst. Bevorzugte Ausgestaltungen des Verfahrens zur Herstellung einer Lithium-Ionen-Zelle ergeben sich aus den weiteren abhängigen Ansprüchen.

Die erfindungsgemäße Kathodenpaste ist für die Herstellung einer Kathode einer Lithium-Ionen-Zelle bzw. einer entsprechenden Batterie vorgesehen und ist durch die folgenden Merkmale a. bis d. gekennzeichnet:
a. Die Kathodenpaste umfasst als Aktivmaterial ein metallisches Lithium-Mischoxid, das aus der Gruppe ausgewählt ist, die aus einem Lithium-Nickel-Mangan-Cobalt-Mischoxid der Formel LiNiₓMn_{y}CO_{z}O₂, wobei x + y + z = 1 und x ≥ 0,6 ist, und einem Lithium-Nickel-Cobalt-Aluminium-Mischoxid der Formel LiNiₓCO_{y}Al_{z}O₂, wobei x + y + z = 1 und x ≥ 0,8 ist, und Mischungen mit den genannten Lithium-Mischoxiden besteht;
b. Die Kathodenpaste umfasst einen Elektrodenbinder auf Basis von Polyvinylidendifluorid;
c. Die Kathodenpaste umfasst ein Lösemittel, das N-Methylpyrrolidon (NMP) und/oder N-Ethylpyrrolidon (NEP) umfasst;
d. Das Lösemittel umfasst eine organische Zusatzkomponente, die dazu geeignet ist, Hydroxidionen zu neutralisieren, und die einen Siedepunkt unter Normaldruck in einem Bereich von 50 °C bis 150 °C aufweist.

Bei dem metallischen Lithium-Mischoxid handelt es sich dabei um ein Mischoxid, das Nickel in einem atomaren Anteil von 60 % oder mehr enthält. Die Erfinder konnten feststellen, dass insbesondere bei solchen Kathoden-Aktivmaterialien mit einem Nickel-Anteil von mehr als 60 % die beschriebenen Probleme mit einer unerwünschten Quervernetzung des Elektrodenbinders auftreten, die eine weitere Verarbeitung der Kathodenpaste in einem Beschichtungsprozess erschweren oder unmöglich machen.

In bevorzugten Ausführungsformen der erfindungsgemäßen Kathodenpaste werden Lithium-Mischoxide mit einem hohen Nickel-Anteil eingesetzt, die bei der Lithium-Ionen-Zellen-Herstellung gebräuchlich sind. Besonders bevorzugt ist beispielsweise NMC-622 und NMC-811, wobei sich die Ziffernfolge jeweils auf die atomaren Anteile von Nickel, Mangan und Cobalt in dem Mischoxid beziehen, also ein atomares Verhältnis von 6:2:2 bzw. von 8:1:1. Ein anderes bevorzugtes Beispiel ist NCA-811 mit Nickel, Cobalt und Aluminium im Verhältnis 8:1:1.

Versuche der Erfinder haben gezeigt, dass es durch die Hinzufügung der organischen Zusatzkomponente zu der Kathodenpaste möglich ist, die Eigenschaften der Kathodenpaste deutlich zu verbessern und damit den Mischprozess der Kathodenpaste und den Beschichtungsprozess bei der Herstellung der Kathode einfacher und weniger aufwändig zu gestalten. Durch die organische Zusatzkomponente wird eine gleichbleibende Qualität und Verarbeitbarkeit der Kathodenpaste erreicht, so dass Qualitätsschwankungen bei der hiermit herstellbaren Kathode vermieden werden. Insbesondere wird durch die organische Zusatzkomponente in der Kathodenpaste vermieden, dass eine unerwünschte und vorzeitige Gelierung der Kathodenpaste auftritt, die eine nachfolgende Verarbeitung wesentlich erschweren würde.

Auch erlaubt die erfindungsgemäße Kathodenpaste einen Verzicht auf besondere technische Maßnahmen bei der Verarbeitung der Kathodenpaste, die Feuchtigkeitseinflüsse verhindern und somit eine unerwünschte Gelierung vermeiden sollen.

Durch die Eigenschaft der organischen Zusatzkomponente im Hinblick auf eine Neutralisierung von Hydroxidionen wird durch diese Zusatzkomponente erreicht, dass eine unerwünschte Quervernetzung des PVDF vermieden wird. Weiterhin wird durch den Siedepunkt der organischen Zusatzkomponente, der bei Normaldruck bevorzugt in einem Bereich von 50 °C bis 150 °C, bevorzugt im Bereich von 80 °C bis 120 °C, liegt, erreicht, dass die organische Zusatzkomponente unter denjenigen Trocknungsbedingungen, die während des Herstellungsprozesses der Kathode eingesetzt werden, praktisch vollständig verdampft. Es sind somit praktisch keine Rückstände der organischen Zusatzkomponente in der beschichteten und getrockneten Kathode mehr vorhanden. Die Eigenschaften der fertiggestellten Kathode werden also durch die organische Zusatzkomponente in der Kathodenpaste nicht beeinflusst. Auf der anderen Seite beeinflusst die organische Zusatzkomponente während der Herstellung der erfindungsgemäßen Kathodenpaste und während deren Verarbeitung die Viskositätseigenschaften der Kathodenpaste in der Weise, dass eine unerwünschte Quervernetzung des PVDF vermieden wird. Dies erleichtert zum einen die Verarbeitung der Kathodenpaste. Weiterhin wird durch die organische Zusatzkomponente eine Lagerung und ein Transport der fertiggestellten Kathodenpaste erleichtert oder überhaupt erst ermöglicht, da die organische Zusatzkomponente eine vorzeitige Gelierung der Kathodenpaste vermeidet.

Insgesamt erlaubt die Erfindung die Herstellung und Verarbeitung einer Kathodenpaste mit im Prinzip den gebräuchlichen Materialien, wobei insbesondere Lithium-Mischoxiden mit einem Nickelgehalt von 60 % oder mehr und Polyvinylidendifluorid (PVDF) als Elektrodenbinder unter Verwendung des Lösemittels N-Methylpyrrolidon (NMP) und/oder N-Ethylpyrrolidon (NEP) verwendet werden können, ohne dass es zu den eingangs genannten Problemen kommt. Insbesondere ist es nicht erforderlich, im Mischprozess der Kathodenpaste und bei dem Beschichtungsprozess zusätzliche Maßnahmen zur Entfeuchtung zu ergreifen, um eine unerwünschte Quervernetzung des Elektrodenbinders zu verhindern. Weiterhin sind keine Polymerisationsinhibitoren oder andere Zusätze, wie beispielsweise anorganische Zusätze wie Aluminiumoxid, Zirkoniumoxid, Vanadiumoxid oder Ähnliches, erforderlich, die die Zusammensetzung der resultierenden Kathode und damit deren Eigenschaften verändern würden. Weiterhin ist es auch nicht erforderlich, als Elektrodenbinder bestimmte modifizierte PVDF-Polymere oder co-polymerisierte PVDFs zu verwenden, die eine Quervernetzung verhindern sollen. In besonders bevorzugten Ausführungsformen ist daher die erfindungsgemäße Kathodenpaste frei von weiteren anorganischen Zusätzen und/oder Polymerisationsinhibitoren und/oder frei von modifzierten PVDF-Polymeren.

Die erfindungsgemäße Kathodenpaste verzichtet also auf spezielle Bindermaterialien, die mit höheren Kosten einhergehen würden. Weiterhin kann bei Einsatz der erfindungsgemäßen Kathodenpaste auf technologisch aufwendige Lösungen bei der Herstellung der Kathoden, wie insbesondere Trockenräume und Schutzatmosphären im Misch- und Beschichtungsbereich, verzichtet werden. Der Einsatz der organischen Zusatzkomponente führt zu einer Stabilisierung der resultierenden Kathodenpaste, die eine einfachere Handhabung der Kathodenpaste im Vergleich mit herkömmlichen Kathodenpasten sowie zu einer verbesserten Lagerfähigkeit und Beschichtbarkeit führt. Dies erhöht die Prozesssicherheit und gewährleistet eine jahreszeitliche Unabhängigkeit, wobei auch insbesondere bei etwas höheren Umgebungstemperaturen eine gleichbleibende Qualität der Kathodenpaste und der damit herstellbaren Kathoden erreicht wird. Darüber hinaus bietet die erfindungsgemäße Kathodenpaste auch einen ökonomischen Vorteil, da handelsübliche Chemikalien verwendet werden können und da keine aufwändigen technologischen Maßnahmen im Misch- und Beschichtungsprozess erforderlich sind.

Bei dererfindungsgemäßen Kathodenpaste handelt es sich um eine nichtwässrige Elektrodenpaste, bei der oder mehrere organische Lösemittel enthalten sind.

Das NMP und/oder das NEP, das für die Herstellung der Kathodenpaste verwendet wird, wird vorzugsweise in *Battery Grade Qualität* eingesetzt. Das Lösemittel zeichnet sich dabei insbesondere dadurch aus, dass es möglichst wenig Wasser enthält. Beispielsweise kann das verwendete Lösemittel maximal 300 ppm Wasser, bevorzugt auch weniger, aufweisen.

In einer besonders bevorzugten Ausführungsform zeichnet sich die erfindungsgemäße Kathodenpaste durch das folgende zusätzliche Merkmal a. aus:
a. Die Kathodenpaste ist im Hinblick auf ihre Viskositätseigenschaften bei Raumtemperatur über einen Zeitraum von mindestens 2 Wochen, vorzugsweise mindestens 4 Wochen, bei Raumtemperatur stabil.

Unter "Raumtemperatur" ist in diesem Zusammenhang eine Temperatur in einem Bereich von 20 °C bis 25 °C bei einer relativen Luftfeuchtigkeit von 20 - 50 % zu verstehen. Unter "Stabilität" ist in diesem Zusammenhang zu verstehen, dass sich die anhand von rheologischen Messwerten erfassbare Viskosität nicht um mehr als 20 % verändert.

Die Erfinder konnten in Vergleichsversuchen zeigen, dass die Viskositätseigenschaften der erfindungsgemäßen Kathodenpaste auch bei einer längeren Lagerung bei Raumtemperatur in einem geschlossenen Gefäß über mehrere Wochen stabil bleiben. Während eines solchen längeren Zeitraums verändert sich dabei die Fließfähigkeit der erfindungsgemäßen Kathodenpaste nicht wesentlich. Insbesondere tritt keine feststellbare Gelierung der Kathodenpaste auf und das Material bleibt homogen mischbar und fließfähig. Weiterhin tritt keine oder kaum eine Sedimentation von Bestandteilen der Paste auf. Zweckmäßigerweise wird die Kathodenpaste bei einer Lagerung in einem geschlossenen Behältnis verwahrt, so dass es nicht zu einer Verdunstung der Lösemittelkomponenten der Kathodenpaste kommt.

Durch die stabilen Viskositätseigenschaften der erfindungsgemäßen Kathodenpaste über einen längeren Zeitraum, der beispielsweise auch mehr als vier Wochen betragen kann, wird die Verarbeitbarkeit der Kathodenpaste wesentlich vereinfacht. Insbesondere ist es möglich, die Kathodenpaste auf Vorrat herzustellen und erst bei Bedarf zu verwenden. Weiterhin ist es dadurch möglich, die Kathodenpaste herzustellen, zu lagern und gegebenenfalls zu transportieren, damit die Kathodenpaste an einem anderen Ort weiterverarbeitet werden kann.

In besonders bevorzugter Weise zeichnet sich die erfindungsgemäße Kathodenpaste durch wenigstens eines derfolgenden zusätzlichen Merkmale a. und/oder b. aus:
a. Die organische Zusatzkomponente ist in einem Anteil von 0,1 bis 10 Gew.-%, bevorzugt in einem Anteil von 0,5 bis 7 Gew.-%, besonders bevorzugt in einem Anteil von 1 bis 5 Gew.-%, in dem Lösemittel enthalten;
b. Das N-Methylpyrrolidon und/oder das N-Ethylpyrrolidon ist in einem Anteil von 60 bis 99,9 Gew.-%, vorzugsweise von 80 bis 99,5 Gew.-%, in dem Lösemittel enthalten.

In besonders bevorzugten Ausführungsformen wird der Anteil der organischen Zusatzkomponente in dem Lösemittel so eingestellt, dass die organische Zusatzkomponente in Bezug auf den Elektrodenbinder bzw. das PVDF in der Kathodenpaste in einer überstöchiometrischen Menge zugegeben wird. Im Allgemeinen ist dabei ein Anteil von 5 Gew.-% der organischen Zusatzkomponente in dem Lösemittel ausreichend. Je nach Mischungsverhältnissen in der Kathodenpaste und insbesondere auch je nach Anteil des Elektrodenbinders in der Kathodenpaste können auch geringere Mengen ausreichend sein. In bevorzugten Ausführungsformen können beispielsweise 5 Gew.-% organische Zusatzkomponente oder 1,2 Gew.-% organische Zusatzkomponente in dem Lösemittel enthalten sein.

In bevorzugten Ausführungsformen besteht das Lösemittel aus nur zwei Komponenten, und zwar der organischen Zusatzkomponente und dem eigentlichen Lösemittel N-Methylpyrrolidon (NMP) und/oder N-Ethylpyrrolidon (NEP), so dass die Summe der Anteile des Lösemittels NMP und/oder NEP und der organischen Zusatzkomponente 100 % ergibt. Gegebenenfalls kann es auch vorgesehen sein, dass noch weitere Komponenten in dem Lösemittel vorhanden sind, beispielsweise ein weiteres organisches Lösemittel, oder dass beispielsweise NMP und NEP als Mischung vorliegen. Die Verwendung ausschließlich des Lösemittels NEP kann bevorzugt sein, da NEP weniger toxisch als NMP ist.

In einer weiteren bevorzugten Ausführungsform zeichnet sich die erfindungsgemäße Kathodenpaste durch mindestens eines der folgenden zusätzlichen Merkmale a. bis c. aus:
a. Die organische Zusatzkomponente ist oder umfasst eine organische Säure, insbesondere Essigsäure, vorzugsweise wasserfreie Essigsäure, und/oder Oxalsäure und/oder Malonsäure;
b. Die organische Zusatzkomponente ist oder umfasst eine Vorstufe einer organischen Säure, insbesondere ein Ester einer organischen Säure, vorzugsweise ein Ester der ortho-Kohlensäure und/oder Ameisensäure, oder ein Anhydrid einer organischen Säure, vorzugsweise Essigsäureanhydrid und/oder Maleinsäureanhydrid;
c. Die organische Zusatzkomponente ist oder umfasst eine C-H-azide organische Verbindung, insbesondere ein Ester und/oder ein Diester und/oder ein Keton und/oder ein Diketon und/oder ein Nitril und/oder ein Dinitril, und/oder eine halogenorganische Verbindung und/oder eine gemischt-substituierte Verbindung, insbesondere Acetessigester, Diethyl-Malonsäureester, Chloressigsäureester und/oder Acetessigsäureethylester.

Insbesondere handelt es sich bei der organischen Zusatzkomponente um eine Komponente, die in NMP und/oder NEP löslich ist bzw. die gut mit NMP und/oder NEP mischbar ist.

Alle die gemäß den vorgenannten Merkmalen a. bis c. bevorzugten organischen Zusatzkomponenten haben die Eigenschaft, dass sie Hydroxidionen neutralisieren können und damit eine Quervernetzung des Polyvinylidendifluorids in der Kathodenpaste zuverlässig verhindern. Die dabei ablaufenden chemischen Vorgänge sind unter Umständen unterschiedlich, führen im Ergebnis jedoch dazu, dass eine Gelierung der Kathodenpaste verhindert wird. Insbesondere kann dies durch eine Reaktivität gegenüber Feuchtigkeit im alkalischen Medium oder über eine Reaktionsfähigkeit mit stark alkalischen Verbindungen unter Bildung stabiler Salze oder durch eine Reaktionsfähigkeit mit alkalischen Verbindungen oder deprotoniertem PVDF aufgrund starker azider Wasserstoffatome hervorgerufen werden.

Weiterhin kann es bevorzugt ein, dass die organische Zusatzkomponente, insbesondere eine organische Säure, die als organische Zusatzkomponente verwendet wird, wasserfrei oder im wesentlichen wasserfrei ist.

Als besonders vorteilhaft hat sich in diesem Zusammenhang der Einsatz von Acetessigsäureethylester und/oder wasserfreier Essigsäure als organische Zusatzkomponente erwiesen.

In besonders bevorzugten Ausführungsformen der erfindungsgemäßen Kathodenpaste zeichnet sich die Kathodenpaste durch das folgende zusätzliche Merkmal a. aus:
a. Die organische Zusatzkomponente ist Acetessigsäureethylester und ist mit einem Anteil von 1 bis 5 Gew.-%, vorzugsweise 5 Gew.-%, in dem Lösemittel enthalten.

In einer alternativen, ebenfalls besonders bevorzugten Ausführungsform der erfindungsgemäßen Kathodenpaste zeichnet sich die Kathodenpaste durch das folgende zusätzliche Merkmal a. aus:
a. Die organische Zusatzkomponente ist wasserfreie Essigsäure und ist mit einem Anteil von 1 bis 5 Gew.-%, vorzugsweise 1,2 Gew.-%, in dem Lösemittel enthalten.

Sowohl bei der Verwendung von Acetessigsäureethylester als organische Zusatzkomponente als auch bei der Verwendung von wasserfreier Essigsäure als organische Zusatzkomponente hat sich in Versuchen der Erfinder gezeigt, dass auch nach einem längeren Zeitraum, insbesondere nach über 40 Tagen Lagerung der Kathodenpaste, keine Gelierung der Paste auftrat. Das Material war nach wie vor homogen mischbar und fließfähig, so dass es ohne weiteres einer Verarbeitung im Rahmen eines Beschichtungsprozesses zugänglich war.

In Bezug auf den Anteil des Lösemittels an der Kathodenpaste insgesamt zeichnet sich die erfindungsgemäße Kathodenpaste in besonders bevorzugter Weise durch das folgende zusätzliche Merkmal a. aus:
a. Der Anteil des Lösemittels in der Kathodenpaste liegt in einem Bereich von 10 bis 50 Gew.-%, vorzugsweise in einem Bereich von 25 bis 40 Gew.-%, insbesondere in einem Bereich von 25 bis 30 Gew.-%.

Bezogen auf die gesamte Zusammensetzung der Kathodenpaste kann der Anteil der organischen Zusatzkomponente insbesondere in einem Bereich zwischen 0,3 % und 2 % liegen.

Der Anteil des Lösemittels und insbesondere der Anteil der organischen Zusatzkomponente an der gesamten Kathodenpaste kann zweckmäßigerweise an die Anteile der übrigen Komponenten angepasst werden. Insbesondere kann der Anteil der organischen Zusatzkomponente an die Menge des jeweilige Aktivmaterials angepasst werden, um ein überstöchiometrisches Verhältnis zu erhalten.

In Bezugauf den Elektrodenbinder zeichnet sich die erfindungsgemäße Kathodenpaste in bevorzugten Ausführungsformen durch mindestens eines der folgenden zusätzlichen Merkmale a. oder b. aus:
a. Das Polyvinylidendifluorid ist ein Polyvinylidendifluorid Homopolymer;
b. Das Polyvinylidendifluorid umfasst ionisch vernetzbare Komponenten.

Vorzugsweise ist der Elektrodenbinder PVDF. Das PVDF kann beispielsweise als Pulver bereitgestellt werden. Als Elektrodenbinder eignet sich insbesondere ein PVDF-Material, das üblicherweise für die Herstellung von Lithium-Ionen-Zellen eingesetzt wird. Vorzugsweise weist das PVDF dabei ein hohes Molekulargewicht auf, das für Anwendungen in diesem Bereich üblich ist. Insbesondere kann ein homopolymeres PVDF für den batterietypischen Einsatz verwendet werden.

Der gesamte Anteil von PVDF in der Kathodenpaste liegt vorzugsweise in einem Bereich zwischen 0,5 Gew.-% und 20 Gew.-%, besonders bevorzugt in einem Bereich von 1 Gew.-% bis 10 Gew.-%. In einigen bevorzugten Ausführungsformen kann der Anteil an PVDF in der gesamten Kathodenpaste insbesondere 7,5 Gew.-% ± 1 Gew.-% betragen.

Weiterhin ist es bevorzugt, dass die Kathodenpaste ein Leitmittel aufweist, vorzugsweise Leitruß. Der Anteil des Leitrußes in der Kathodenpaste kann sich dabei im üblichen Rahmen bewegen. Beispielsweise kann der Anteil des Leitrußes oder allgemein des Leitmittels in einem Bereich von 1 Gew.-% bis 30 Gew.-% liegen, besonders bevorzugt 5 Gew.-% bis 20 Gew.-%. In einer besonders bevorzugten Ausgestaltung der erfindungsgemäßen Kathodenpaste liegt der Anteil des Leitrußes bei 15 Gew.-% ± 1 Gew.-%.

Die Erfindung umfasst weiterhin ein Verfahren zur Herstellung einer erfindungsgemäßen Kathodenpaste, die sich insbesondere durch die organische Zusatzkomponente in der oben beschriebenen Weise auszeichnet. Das Verfahren zur Herstellung der Kathodenpaste umfasst die folgenden Verfahrensschritten a. bis g:
a. Es wird ein Lösemittel bereitgestellt, das N-Methylpyrrolidon und/oder N-Ethylpyrrolidon als Lösemittel und eine organische Zusatzkomponente, die dazu geeignet ist, Hydroxidionen zu neutralisieren und die einen Siedepunkt unter Normaldruck in einem Bereich von 50 °C bis 150 °C aufweist, umfasst;
b. Ein Elektrodenbinder auf Basis von Polyvinylidendifluorid wird unter Rühren in dem Lösemittel gelöst;
c. Optional wird ein Leitmittel, insbesondere Leitruß, zugemischt;
d. Es wird ein metallisches Lithium-Mischoxid, das aus der Gruppe ausgewählt ist, die aus einem Lithium-Nickel-Mangan-Cobalt-Mischoxid der Formel LiNiₓMn_{y}CO_{z}O₂, wobei x + y + z = 1 und x ≥ 0,6 ist, und einem Lithium-Nickel-Cobalt-Aluminium-Mischoxid der Formel LiNiₓCo-_{y}Al_{z}O₂, wobei x + y + z = 1 und x ≥ 0,8 ist, und Mischungen mit den genannten Lithium-Mischoxiden besteht, bereitgestellt;
e. Das Lithium-Mischoxid gemäß Schritt d. wird mit dem aus Schritt b. oder gegebenenfalls c. resultierenden Gemisch gemischt;
f. Optional wird zur Einstellung einer bestimmten Viskosität der aus Schritt e. resultierenden Mischung ein weiteres Lösemittel zugesetzt;
g. Optional wird die aus Schritt f. resultierende Mischung filtriert.

Wichtig bei diesem Verfahren ist, dass das Aktivmaterial, also das metallische Lithium-Mischoxid, nicht ohne vorherige Neutralisation mit dem Elektrodenbinder PVDF in Kontakt kommt, da es sonst zu unerwünschten Quervernetzungsreaktionen kommen könnte. Daherwird das PVDF in dem Lösemittel, das neben dem organischen Lösemittel NMP und/oder NEP die organische Zusatzkomponente enthält, gelöst, bevor das metallische Lithium-Mischoxid zugegeben wird. Die Zugabe des Lithium-Mischoxids zu der Mischung des Lösemittels mit dem PVDF, die gegebenenfalls auch den Leitruß enthält, erfolgt vorzugsweise schrittweise und/oder langsam, damit unerwünschte Quervernetzungen zuverlässig vermieden werden.

Das beschriebene Verfahren erlaubt im Schritt f. optional die Einstellung einer bestimmten Viskosität durch Zusatz von weiterem Lösemittel. Die jeweilige Viskosität und/oder deren optionale Einstellung in dem Verfahrensschritt f. kann an die jeweiligen Bedingungen und Anwendungen angepasst werden.

Auch eine abschließende Filterung der resultierenden Mischung im Schritt g. des Verfahrens kann je nach Anwendung sinnvoll sein oder es kann gegebenenfalls darauf verzichtet werden.

Die Erfindung umfasst weiterhin eine Verwendung der beschriebenen Kathodenpaste zur Herstellung von Lithium-Ionen-Zellen bzw. zur Herstellung von entsprechenden Batterien, wobei zur Bereitstellung der Kathode der Zellen die erfindungsgemäße Kathodenpaste auf einen Stromkollektor aufgebracht und getrocknet wird.

Schließlich umfasst die Erfindung ein Verfahren zur Herstellung einer Lithium-Ionen-Zelle mit mindestens einer Kathode und mindestens einer Anode bzw. zur Herstellung einer entsprechenden Batterie. Bei diesem Herstellungsverfahren kann im Prinzip wie bei herkömmlichen Herstellungsverfahren für Lithium-Ionen-Zellen vorgegangen werden, bei denen eine Kathodenpaste für die Herstellung der Kathode verwendet wird. Kennzeichnendes Merkmal des erfindungsgemäßen Herstellungsverfahrens ist, dass für die Herstellung bzw. die Bereitstellung der mindestens einen Kathode eine erfindungsgemäße Kathodenpaste verwendet wird, die sich durch die beschriebene organische Zusatzkomponente auszeichnet. Bei dem Herstellungsverfahren wird diese Kathodenpaste auf einen Stromkollektor aufgebracht und getrocknet. Die übrigen Schritte für die Herstellung einer Lithium-Ionen-Zelle sind dem Fachmann bekannt.

Als Stromkollektor für die Kathode kann insbesondere eine Folie oder ein Netz oder eine anderweitige Schicht aus Aluminium verwendet werden, die beispielsweise eine Dicke zwischen 1 µm und 500 µm aufweist. Auf diesen Stromkollektor kann die erfindungsgemäße Kathodenpaste auf verschiedene Weise aufgebracht werden, wobei bei der Aufbringung vorzugsweise eine dünne Schicht aufgetragen wird. Die Schichtdicke kann beispielsweise in einem Bereich von 25 µm bis 150 µm liegen. Hierfür kann ein üblicher Rakelprozess (*Doctor Blade Coating*) oder eine Aufbringung mit Schlitzdüsen vorgenommen werden. Auch andere Beschichtungsverfahren sind selbstverständlich möglich. Anschließend erfolgt eine Trocknung der Schicht, wobei bei diesem Trocknungsschritt das organische Lösemittel (NMP und/oder NEP) sowie die organische Zusatzkomponente verdampfen. Die resultierende Kathodenschicht haftet anschließend fest auf dem Stromkollektor.

Die Herstellung der Anode, die Anordnung des oder der Separatoren sowie die Einbringung von Elektrolyt und gegebenenfalls weitere Maßnahmen für die Herstellung der Lithium-Ionen-Zelle, beispielsweise die Kontaktierung der Elektroden, können in an sich bekannterweise erfolgen.

In einer besonders bevorzugten Ausführungsform des erfindungsgemäßen Verfahrens zeichnet sich das Verfahren durch das folgende zusätzliche Merkmal a. aus:
a. Die Trocknung der Kathodenpaste nach deren Auftragen auf den Stromkollektor erfolgt in einem Temperaturbereich von 50 °C bis 150 °C, vorzugsweise in einem Temperaturbereich von 80 °C bis 130 °C, insbesondere in einem Temperaturbereich von 100 °C bis 120 °C.

Während dieses Trocknungsschrittes verdampft das Lösemittel, das aus dem organischen Lösemittel NMP und/oder NEP sowie der organischen Zusatzkomponente besteht. Das heißt, dass die organische Zusatzkomponente ebenso wie das eigentliche Lösemittel NMP und/oder NEP in der resultierenden Kathode praktisch nicht mehr vorhanden sind. Durch den erfindungsgemäßen Zusatz der organischen Zusatzkomponenten werden also keinen zusätzlichen Substanzen in die Kathode eingebracht, die deren Eigenschaften beeinflussen könnten.

Durch den Siedepunkt der organischen Zusatzkomponente in einem Bereich von 50 °C bis 150 °C zeichnet sich die Zusatzkomponente dadurch aus, dass sie bei einem üblichen Herstellungsprozess einer Kathode bei dem dabei vorgesehenen Trocknungsschritt verdampfen kann. Unter Umständen kann eine Anpassung der Trocknungsbedingungen, insbesondere eine Anpassung der Temperatur während des Trocknungsprozesses, an die jeweils verwendete organische Zusatzkomponente in Anpassungan deren jeweiligen Siedepunkt vorgenommen werden. Zusatzkomponenten mit einem relativ niedrigen Siedepunkt eignen sich dabei für solche Prozesse, die mit relativ niedrigen Temperaturen bei der Trocknung arbeiten. Wenn die Zusatzkomponente einen relativ hohen Siedepunkt aufweist, sollte die Trocknungstemperatur entsprechend hoch gewählt werden.

Die besonders bevorzugten organischen Zusatzkomponenten Acetessigsäureethylester und Essigsäure bzw. Eisessig eignen sich aufgrund ihres Siedepunkts beispielsweise für übliche Herstellungsprozesse, bei denen mit Trocknungstemperaturen im Bereich zwischen 100 °C und 120 °C gearbeitet wird.

In einer besonders bevorzugten Ausführungsform des erfindungsgemäßen Verfahrens zeichnet sich das Verfahren durch das folgende zusätzliche Merkmal a. aus:
a. Die Ausbildung der mindestens einen Kathode erfolgt unter Normaldruckbedingungen und/oder unter Normalluftbedingungen.

Wie oben bereits erläutert, erlaubt der Einsatz der organischen Zusatzkomponente gemäß der Erfindung einen Verzicht auf technisch aufwändige Maßnahmen zur Vermeidung von unerwünschten Quervernetzungsreaktionen des PVDFs, die insbesondere durch die stark hygroskopischen Eigenschaften des Aktivmaterials der Kathode, also insbesondere der Lithium-Mischoxide mit einem hohen Anteil von Nickel, auftreten. Bei Verwendung der erfindungsgemäßen Kathodenpaste in dem Herstellungsverfahren fürdie Lithium-Ionen-Zelle sind also keine besonderen Vorkehrungsmaßnahmen wie z.B. Schutzgas und/oder hochtrockene Atmosphären erforderlich, da eine Quervernetzung des PVDF durch die organische Zusatzkomponente verhindert wird. Der Herstellungs- bzw. Mischprozess für die Kathodenpaste und der Auftragungsprozess der Kathodenpaste auf einen Stromkollektor kann daher unter Normaldruckbedingungen und/oder unter Normalluftbedingungen durchgeführt werden. Hierdurch ist es möglich, den Herstellungsprozess unter Verwendung der erfindungsgemäßen Kathodenpaste weniger aufwändig auszugestalten, wobei gleichzeitig eine gleichbleibende Qualität der Kathode und damit eine gleichbleibende Qualität der resultierenden Lithium-Ionen-Zelle gewährleistet wird.

Weitere Merkmale und Vorteile der Erfindung ergeben sich aus der nachfolgenden Beschreibung von Ausführungsbeispielen in Verbindung mit der Zeichnung. Hierbei können die einzelnen Merkmale jeweils für sich oder in Kombination miteinander verwirklicht sein.

### KURZBESCHREIBUNG DER ZEICHNUNG

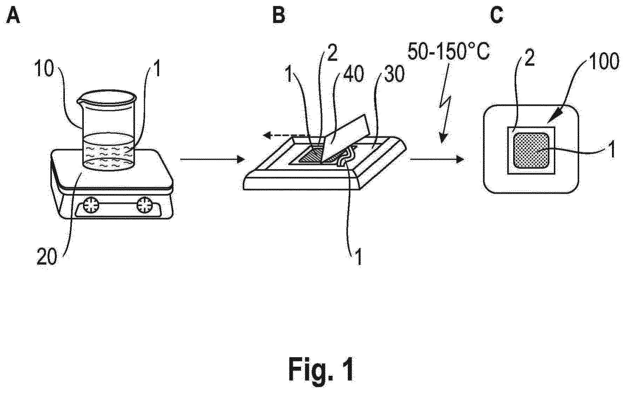

Fig. 1 zeigt ein beispielhaftes Verfahren zurAufbringung der erfindungsgemäßen Kathodenpaste auf einen Stromkollektor.

### DETAILLIERTE BESCHREIBUNG DER AUSFÜHRUNGSBEISPIELE

Es wurden verschiedene Vergleichsversuche von den Erfindern durchgeführt, bei denen die resultierenden Viskositätseigenschaften der erfindungsgemäßen Kathodenpasten im Vergleich mit herkömmlichen Kathodenpasten nach jeweils einem längeren Zeitraum miteinander verglichen wurden.

Die Vergleichspasten ohne organische Zusatzkomponente und die erfindungsgemäßen Kathodenpasten wurden gemäß der folgenden Beschreibung hergestellt.

### a) Vergleichs-Kathodenpaste (NMC-622) ohne organische Zusatzkomponente

In einem Kunststoffgefäß wurden 142,5 g N-Ethylpyrrolidon (NEP) oder N-Methylpyrrolidon (NMP) als Lösemittel eingewogen. Zu dem Lösemittel wurde unter intensiven Rühren 7,5 g PVDF-Pulver (Kynar HSV1810; Arkema, Frankreich) gegeben und bis zur vollständigen Lösung des PVDF-Pulvers gerührt.

Die Lösung wurde mit 15 g Leitruß (LiTX200, Cabot, USA) versetzt und intensiv gerührt, bis eine homogene Mischung (Rußpaste) entstanden war.

In einen Mischbehälterwurden 720 g Kathodenaktivmaterial NMC-622 eingewogen. Zu dem Material wurde schrittweise die Rußpaste gegeben. Nach jedem Zugabeschritt wurde die entstandene Mischung in einem Doppelplanetenmischer geknetet, bis das Material homogen verteilt war und eine agglomeratfreie Paste entstanden war. Zur Einstellung der vorgegebenen Endviskosität wurde weiteres Lösemittel (NEP bzw. NMP) hinzugefügt.

Die Paste wurde filtriert und anschließend rheologisch und auf vorhandene Agglomerate hin geprüft. Zur weiteren Untersuchung wurde die Paste in einem verschlossenen Kunststoffbehälter gelagert.

Nach 28 Tagen bei einer Lagerung bei 22 °C und einer Raumfeuchte von 20 - 30 % war eine deutliche Gelierung der Paste festzustellen. Das Material war fest und nicht mehr homogen mischbar. Eine Fließfähigkeit war nicht mehr vorhanden.

### b) Kathodenpaste (NMC-622) mit NEP oder NMP und Acetessigsäureethylester

In einem Kunststoffgefäß wurden 7,13 g Acetessigsäureethylester (AEE) und 135,37 g N-Ethylpyrrolidon (NEP) oder N-Methylpyrrolidon (NMP) eingewogen. Zu der Lösemittelmischung wurde unter intensiven Rühren 7,5 g PVDF-Pulver (Kynar HSV1810; Arkema, Frankreich) gegeben und bis zur vollständigen Lösung des PVDF-Pulvers gerührt.

Die Lösung wurde mit 15 g Leitruß (LiTX200, Cabot, USA) versetzt und intensiv gerührt, bis eine homogene Mischung (Rußpaste) entstanden war.

In einen Mischbehälterwurden 720 g Kathodenaktivmaterial NMC-622 eingewogen. Zu dem Material wurde schrittweise die Rußpaste gegeben. Nach jedem Zugabeschritt wurde die entstandene Mischung in einem Doppelplanetenmischer geknetet, bis das Material homogen verteilt war und eine agglomeratfreie Paste entstanden war. Zur Einstellung der vorgegebenen Endviskosität wurde weiteres Lösemittel (AEE und NEP bzw. NMP im Verhältnis 1:19) hinzugefügt.

Die Paste wurde filtriert und anschließend rheologisch und auf vorhandene Agglomerate hin geprüft. Zur weiteren Untersuchung wurde die Paste in einem verschlossenen Kunststoffbehälter gelagert.

Nach 43 Tagen bei einer Lagerung bei 22 °C und einer Raumfeuchte von 20 - 30 % war keine Gelierung der Paste festzustellen. Das Material war gering sedimentiert und homogen mischbar. Die Fließfähigkeit war nach wie vor vorhanden.

### c) Kathodenpaste (NMC-622) mit NEP oder NMP und wasserfreier Essigsäure (Eisessig)

In einem Kunststoffbehälter wurden 1,71 g Essigsäure (Eisessig) und 140,79 g N-Ethylpyrrolidon (NEP) oder N-Methylpyrrolidon (NMP) eingewogen. Zu der Lösemittelmischung wurde unter intensiven Rühren 7,5 g PVDF-Pulver (Kynar HSV1810; Arkema, Frankreich) gegeben und bis zur vollständigen Lösung des PVDF-Pulvers gerührt.

Die Lösung wurde mit 15 g Leitruß (LiTX200, Cabot, USA) versetzt und intensiv gerührt, bis eine homogene Mischung (Rußpaste) entstanden war.

In einen Mischbehälterwurden 720 g Kathodenaktivmaterial NMC-622 eingewogen. Zu dem Material wurde schrittweise die Rußpaste gegeben. Nach jedem Zugabeschritt wurde die entstandene Mischung in einem Doppelplanetenmischer geknetet, bis das Material homogen verteilt war und eine agglomeratfreie Paste entstanden war. Zur Einstellung der vorgeeugebenen Endviskosität wurde weiteres Lösemittel (Eisessig, vermischt mit NEP bzw. NMP im Verhältnis 3:247) hinzugefügt.

Die Paste wurde filtriert und anschließend rheologisch und auf vorhandene Agglomerate hin geprüft. Zur weiteren Untersuchung wurde die Paste in einem verschlossenen Kunststoffbehälter gelagert.

Nach 41 Tagen bei einer Lagerung bei 22 °C und einer Raumfeuchte von 20 - 30 % war keine Gelierung der Paste festzustellen. Das Material war etwas sedimentiert und homogen mischbar. Die Fließfähigkeit war nach wie vor vorhanden.

### d) Vergleichs-Kathodenpaste (NMC-811) ohne organische Zusatzkomponente

Die Rußpaste wurde analog zu Beispiel a) hergestellt. In den Mischbehälter wurden 720 g Kathodenaktivmaterial NMC-811 eingewogen. Das Material wurde weiterhin analog zu Beispiel 1 zu einer homogenen Paste verarbeitet und untersucht.

Nach 27 Tagen bei einer Lagerung bei 22 °C und einer Raumfeuchte von 20 - 30 % war eine Gelierung der Paste festzustellen. Das Material war fest und nicht mehr homogen mischbar. Eine Fließfähigkeit war nicht mehr vorhanden.

### e) Kathodenpaste (NMC-811) mit NEP oder NMP und Acetessigsäureethylester

Die Rußpaste wurde analog zu Beispiel b) hergestellt. In den Mischbehälter wurden 720 g Kathodenaktivmaterial NMC-811 eingewogen. Das Material wurde weiterhin analogzu Beispiel b) zu einer homogenen Paste verarbeitet und untersucht.

Nach 36 Tagen bei einer Lagerung bei 22 °C und einer Raumfeuchte von 20 - 30 % war keine Gelierung der Paste festzustellen. Das Material war homogen mischbar. Die Fließfähigkeit war sehr gut.

Insgesamt zeigte sich bei diesen Versuchen, dass durch die Zugabe der organischen Zusatzkomponente zu dem Lösemittel der Kathodenpaste eine unerwünschte Gelierung zuverlässig vermieden werden konnte.

Fig. 1 illustriert eine beispielhafte Möglichkeit zur Weiterverarbeitung der erfindungsgemäßen Kathodenpaste bei der Herstellung einer Lithium-Ionen-Zelle. Dabei wird die Kathodenpaste in einem Rakelverfahren auf einen Stromkollektor aufgebracht und anschließend getrocknet.

Zunächst wird die Kathodenpaste 1 gemäß der obigen Beschreibung, beispielsweise gemäß dem Ausführungsbeispiel b) oder c) oder e) hergestellt. Die Kathodenpaste 1 wird in einem Kunststoffgefäß 10 bereitgestellt und mithilfe eines Rührers 20 homogenisiert (Schritt A).

Zur Herstellung der Kathode wird die Kathodenpaste 1 auf einen Stromkollektor 2, insbesondere eine Aluminiumfolie, als dünne Schicht aufgetragen. Hierfür wird der Stromkollektor 2 auf einem Träger 30 platziert und die Kathodenpaste 1 mithilfe eines Rakels 40 gleichmäßig als dünne Schicht auf den Stromkollektor 2 aufgebracht (Schritt B).

Anschließend erfolgt eine Trocknung der Kathodenpastenschicht bei einer Temperatur in einem Bereich von 50 °C bis 150 °C. Besonders bevorzugt ist eine Trocknung in einem Temperaturbereich von 100 °C bis 120 °C. Je nach Gegebenheiten kann die Trocknung für einen Zeitraum von einigen Minuten bis etwa eine Stunde erfolgen, beispielsweise zwischen 5 bis 60 Minuten. Während dieserTrocknung verdampft das Lösemittel mit dem organischen Lösemittel NMP oder NEP und der organischen Zusatzkomponente. Aus diesem Prozess geht die fertiggestellte Kathode 100 hervor, bei der die Kathodenpaste 1 auf den Stromkollektor 2 aufgebracht ist und das Lösemittel verdampft ist. Diese Kathode 100 kann in an sich bekannter Weise für die Herstellung einer funktionsfähigen Lithium-Ionen-Zelle weiterverwendet werden.

## Patentansprüche

1. Kathodenpaste (1) für die Herstellung einer Kathode einer Lithium-Ionen-Zelle mit den folgenden Merkmalen:
a. Die Kathodenpaste (1) umfasst als Aktivmaterial ein metallisches Lithium-Mischoxid, das aus der Gruppe ausgewählt ist, die aus einem Lithium-Nickel-Mangan-Cobalt-Mischoxid der Formel LiNiₓMn_{y}CO_{z}O₂, wobei x+y+z= 1 und x ≥ 0,6 ist, und einem Lithium-Nickel-Cobalt-Aluminium-Mischoxid der Formel LiNiₓCO_{y}Al_{z}O₂, wobei x + y + z = 1 und x ≥ 0,8 ist, und Mischungen mit den genannten Lithium-Mischoxiden besteht;
b. Die Kathodenpaste (1) umfasst als Elektrodenbinder Polyvinylidendifluorid oder einen Elektrodenbinder auf Basis von Polyvinylidendifluorid;
c. Die Kathodenpaste (1) umfasst ein Lösemittel, das N-Methylpyrrolidon und/oder N-Ethylpyrrolidon umfasst;
d. Das Lösemittel umfasst eine organische Zusatzkomponente, die dazu geeignet ist, Hydroxidionen zu neutralisieren, und die einen Siedepunkt unter Normaldruck in einem Bereich von 50 °C bis 150 °C aufweist.

2. Kathodenpaste nach Anspruch 1 mit dem folgenden zusätzlichen Merkmal:
a. Die Kathodenpaste (1) ist im Hinblick auf ihre Viskositätseigenschaften bei Raumtemperatur über einen Zeitraum von mindestens 2 Wochen, vorzugsweise mindestens 4 Wochen, bei Raumtemperaturstabil.

3. Kathodenpaste nach Anspruch 1 oder Anspruch 2 mit mindestens einem der folgenden zusätzlichen Merkmale:
a. Die organische Zusatzkomponente ist in einem Anteil von 0,1 bis 10 Gew.-%, bevorzugt in einem Anteil von 0,5 bis 7 Gew.-%, besonders bevorzugt in einem Anteil von 1 bis 5 Gew.-%, in dem Lösemittel enthalten;
b. Das N-Methylpyrrolidon und/oder das N-Ethylpyrrolidon ist in einem Anteil von 60 bis 99,9 Gew.-%, vorzugsweise von 80 bis 99,5 Gew.-%, in dem Lösemittel enthalten.

4. Kathodenpaste nach einem der vorhergehenden Ansprüche mit mindestens einem der folgenden zusätzlichen Merkmale:
a. Die organische Zusatzkomponente ist oder umfasst eine organische Säure, insbesondere Essigsäure, vorzugsweise wasserfreie Essigsäure, und/oder Oxalsäure und/oder Malonsäure;
b. Die organische Zusatzkomponente ist oder umfasst eine Vorstufe einer organischen Säure, insbesondere ein Ester einer organischen Säure, vorzugsweise ein Ester der ortho-Kohlensäure und/oder Ameisensäure, oder ein Anhydrid einer organischen Säure, vorzugsweise Essigsäureanhydrid und/oder Maleinsäureanhydrid;
c. Die organische Zusatzkomponente ist oder umfasst eine C-H-azide organische Verbindung, insbesondere ein Ester und/oder ein Diester und/oder ein Keton und/oder ein Diketon und/oder ein Nitril und/oder ein Dinitril, und/oder eine halogenorganische Verbindung und/oder eine gemischt-substituierte Verbindung, insbesondere Acetessigester, Diethyl-Malonsäureester, Chloressigsäureester und/oder Acetessigsäureethylester.

5. Kathodenpaste nach einem der vorhergehenden Ansprüche mit mindestens einem der folgenden zusätzlichen Merkmale:
a. Die organische Zusatzkomponente ist Acetessigsäureethylester;
b. Die organische Zusatzkomponente ist wasserfreie Essigsäure.

6. Kathodenpaste nach einem der vorhergehenden Ansprüche mit dem folgenden zusätzlichen Merkmal:
a. Die organische Zusatzkomponente ist Acetessigsäureethylester und ist mit einem Anteil von 1 bis 5 Gew.-%, vorzugsweise 5 Gew.-%, in dem Lösemittel enthalten.

7. Kathodenpaste nach einem der vorhergehenden Ansprüche mit dem folgenden zusätzlichen Merkmal:
a. Die organische Zusatzkomponente ist wasserfreie Essigsäure und ist mit einem Anteil von 1 bis 5 Gew.-%, vorzugsweise 1,2 Gew.-%, in dem Lösemittel enthalten.

8. Kathodenpaste nach einem der vorhergehenden Ansprüche mit dem folgenden zusätzlichen Merkmal:
a. Der Anteil des Lösemittels in der Kathodenpaste (1) liegt in einem Bereich von 10 bis 50 Gew.-%, vorzugsweise in einem Bereich von 25 bis 40 Gew.-%, insbesondere in einem Bereich von 25 bis 30 Gew.-%.

9. Kathodenpaste nach einem der vorhergehenden Ansprüche mit mindestens einem der folgenden zusätzlichen Merkmale:
a. Das Polyvinylidendifluorid ist ein Polyvinylidendifluorid Homopolymer;
b. Das Polyvinylidendifluorid umfasst ionisch vernetzbare Komponenten.

10. Kathodenpaste nach einem der vorhergehenden Ansprüche mit dem folgenden zusätzlichen Merkmal:
a. Die Kathodenpaste (1) umfasst ein Leitmittel, vorzugsweise Leitruß.

11. Verfahren zur Herstellung einer Kathodenpaste (1) gemäß einem derAnsprüche 1 bis 10, wobei das Verfahren die folgenden Verfahrensschritte umfasst:
a. Es wird ein Lösemittel bereitgestellt, das N-Methylpyrrolidon und/oder N-Ethylpyrrolidon und eine organische Zusatzkomponente, die dazu geeignet ist, Hydroxidionen zu neutralisieren und die einen Siedepunkt unter Normaldruck in einem Bereich von 50 °C bis 150 °C aufweist, umfasst;
b. Ein Elektrodenbinder auf Basis von Polyvinylidendifluorid wird unter Rühren in dem Lösemittel gelöst;
c. Optional wird ein Leitmittel, insbesondere Leitruß, zugemischt;
d. Es wird ein metallisches Lithium-Mischoxid, das aus der Gruppe ausgewählt ist, die aus einem Lithium-Nickel-Mangan-Cobalt-Mischoxid der Formel LiNiₓMn_{y}CO_{z}O₂, wobei x + y + z = 1 und x ≥ 0,6 ist, und einem Lithium-Nickel-Cobalt-Aluminium-Mischoxid der Formel LiNiₓCO_{y}Al_{z}O₂, wobei x + y + z = 1 und x ≥ 0,8 ist, und Mischungen mit den genannten Lithium-Mischoxiden besteht, bereitgestellt;
e. Das Lithium-Mischoxid gemäß Schritt d. wird mit dem aus Schritt b. oder gegebenenfalls c. resultierenden Gemisch gemischt;
f. Optional wird zur Einstellung einer bestimmten Viskosität der aus Schritt e. resultierenden Mischung weiteres Lösemittel zugesetzt;
g. Optional wird die aus Schritt f. resultierende Mischung filtriert.

12. Verwendung einer Kathodenpaste (1) gemäß einem der Ansprüche 1 bis 10 zur Herstellung von Lithium-Ionen-Zellen, wobei zur Bereitstellung der Kathode der Zellen die Kathodenpaste (1) auf einen Stromkollektor (2) aufgebracht und getrocknet wird.

13. Verfahren zur Herstellungeiner Lithium-Ionen-Zelle mit mindestens einer Kathode und mindestens einer Anode, **dadurch gekennzeichnet, dass** für die Ausbildung der mindestens einen Kathode eine Kathodenpaste (1) gemäß einem der Ansprüche 1 bis 10 auf einen Stromkollektor (2) aufgebracht und getrocknet wird.

14. Verfahren nach Anspruch 13 mit dem folgenden zusätzlichen Merkmal:
a. Die Trocknung der Kathodenpaste (1) erfolgt in einem Temperaturbereich von 50 °C bis 150 °C, vorzugsweise in einem Temperaturbereich von 80 °C bis 130 °C, insbesondere in einem Temperaturbereich von 100 °C bis 120 °C.

15. Verfahren nach Anspruch 13 oder Anspruch 14 mit dem folgenden zusätzlichen Merkmal:
a. Die Ausbildung der mindestens einen Kathode erfolgt unter Normaldruckbedingungen und/oder unter Normalluftbedingungen.
